# EUROPEAN PATENT SPECIFICATION

(11) **EP 1 623 615 B1**
(45) Date of publication and mention of the grant of the patent: **13.06.2012**
(21) Application number: 05107183.5
(22) Date of filing: 04.08.2005
(51) Int. Cl.: A01B 1/06, A01D 34/90, B25G 3/22

(54) **Garden tool adjustment**
Gartengerätverstellung
Ajustement pour outil de jardinage

(30) Priority: 04.08.2004 GB 0417364
(43) Date of publication of application: 08.02.2006
(73) Proprietor: ROBERT BOSCH GMBH, 70469 Stuttgart (DE)
(72) Inventor: Ling, Matthew, IP14 1EY, Stowmarket (GB); Beadman, Robert, IP14 1EY, Stowmarket (GB)
(74) Representative: Bailey, David Martin

(56) References cited:
- EP-A- 0 893 045
- WO-A-2004/090349
- DE-A1- 3 625 287
- DE-A1- 19 827 061
- DE-U1- 29 604 237
- DE-U1- 29 820 433
- US-A- 5 662 428

## Description

The present invention relates to garden tool adjustment, eg. see WO 2004/090 349. In particular, it relates to an adjustment arrangement allowing adjustment of the length of the handle of a garden tool and also for rotation of a portion of the shaft. More particularly it relates to such adjustment in a line trimmer.

A line trimmer is an implement for cutting vegetation, usually grass or weeds, and which comprises a rotating cutting head mounted at one end of a shaft, with a handle at the other end of the shaft. The cutting head includes a cutting element, typically in the form of a resilient plastics wire or line fed from a spool; or a substantially rigid plastics cutter element. The head is caused to rotate by means of an electric motor or a gearing arrangement driven by a small petrol engine.

Line trimmers are typically used with the cutter head in a horizontal configuration for cutting grass around obstacles, which obstacles prevent access by a lawn mower. However, they can also be used as lawn-edging apparatus by rotation of the cutting head into a vertical configuration. Typically, the user simply rotates the whole line trimmer by 180°. However, this often means that the handle is in an uncomfortable position for the user. Some line trimmers include a cutting head which is rotatable with respect of the shaft or the handle such that the user continues to hold the handle in the normal manner. However, the user still has to edge sideways along the edge of the lawn rather than being able to walk forwards. The present invention seeks to provide an alternative arrangement, achieving dual purpose operation, and providing greater comfort for the user, with rapid interchangeability.

In its broadest sense, the present invention, as claimed, provides a garden tool having a working head, a handle and a shaft intermediate the working head and handle. The shaft is slidably mounted within the handle to provide adjustment of the length of the tool. The shaft is lockable at a desired tool length by means of a clamp assembly including a clamp body rotatable upon a clamp shaft between a locked position, in which adjustment of the shaft within the handle is prevented, and an unlocked position in which adjustment of the shaft within the handle is possible.

The shaft includes a plurality of longitudinal grooves and is rotatable within the handle assembly between two defined positions at about 90° to each other.

The clamp assembly includes an elongate clamp shaft adapted to engage the shaft frictionally.

Preferably, the clamp shaft includes at least one location tab engageable with at least one longitudinal groove of the shaft to define a preset angular position of handle and shaft.

Preferably, the clamp shaft includes at least two radially spaced clamp shaft elements.

Preferably, the shaft includes two or four longitudinal grooves. More preferably, the shaft includes four uniformly spaced grooves.

Preferably, the clamp shaft includes two location tabs, on opposed inner surfaces of the clamp shaft defining alternative preset angular positions of handle and shaft in opposition with the four longitudinal grooves of the shaft.

In one particular aspect, the clamp assembly further comprises a clamp body rotatable upon the clamp shaft in a locking direction in which the shaft is caused to be held by the clamp assembly and an unlocking direction in which the shaft is caused to be moveable within the clamp.

Preferably, a limiting arrangement is provided to limit the extent of permitted rotation of the clamp body with respect to the clamp shaft in the unlocking direction.

Advantageously, the limiting arrangement limits rotation of the clamp body to less than one full turn thereof, more advantageously less than one half of a full turn, even more advantageously about one quarter of a full turn.

Suitably, the clamp shaft includes an external threaded portion for receipt of a corresponding internal thread of the clamp body and the clamp body comprises an internal bearing surface adapted to bear down on the clamp shaft as the clamp body is rotated from an 'unlocked' position to a 'locked' position.

Preferably, the clamp shaft comprises a plurality of radically spaced clamp shaft elements. More preferably, there are from two to four clamp shaft elements. Most preferably, there are two clamp shaft elements.

Preferably, the limiting arrangement comprises a clamp shaft limit stop formed towards but spaced from the "locked" end of the thread of clamp-shaft threaded portion; and a corresponding clamp body limit stop formed in the clamp body.

Preferably, the limit stop has a ramp on its reverse side so that the clamp body is readily distorted so as to pass over the stop during assembly.

Preferably, the apparatus further comprises a detent arrangement to hold the clamp body in the locked position. The detent arrangement suitably comprises a generally hemispherical projection provided at the end of the thread of threaded portion of the clamp shaft; and a correspondingly-shaped recess formed in the corresponding part of the clamp body. Multiple detent arrangements may be provided to enable further tightening to accommodate possible wear in use.

Preferably, limiting arrangement and/or detent arrangement are each provided as opposed pairs of limit stops and detent components.

Suitably, the handle is moulded from a plastics material and the clamp shaft forms a part of the handle moulding.

Preferably, the working head is adjustable between a horizontal working configuration and a vertical working configuration.

The above and other aspects of the present invention will now be described in further detail, by way of example only, with reference to the accompanying figures, in which:
Figure 1 is a side view of an embodiment of a tool in accordance with the present invention, in the form of a line trimmer, in a line trimmer configuration (A), and in a lawn-edging configuration (B);
Figure 2 is a part perspective view of the handle and shaft of the embodiment of Figure 1 with the shaft in a locked configuration;
Figure 3 is a longitudinal cross-sectional view of the view of Figure 2.
Figure 4 is a part perspective view of the handle and shaft of the embodiment of Figure 1 with the shaft in an unlocked configuration,
Figure 5 is a longitudinal cross-sectional view of the view of Figure 4;
Figure 6 is a part disassembled perspective view of the embodiment of Figure 2 from the direction of the handle; and
Figure 7 is a part-disassembled view of the embodiment of Figure 1 from the working head direction.

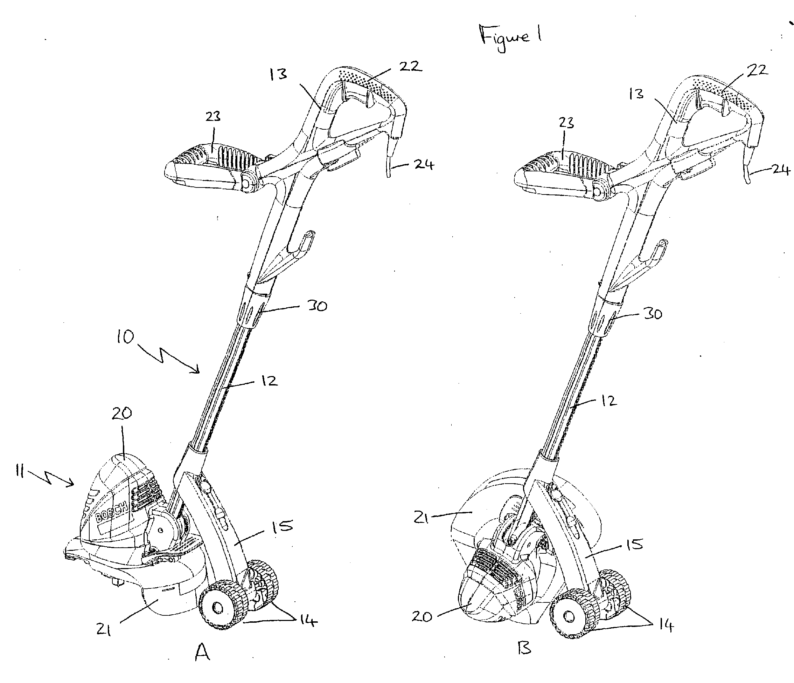

Referring to Figure 1, there is shown an embodiment of a tool in accordance with the present invention in the form of a line trimmer 10. Line trimmer 10 is configurable as a lawn trimmer (Figure 1A), for example, for use in trimming grass around tree trunks, washing lines etc, and as a lawn-edging apparatus (Figure 1B). In Figure 1B it can be seen that in use of the tool the operator can walk forwards along the edge to be trimmed for optimum comfort and control. The line trimmer 10 includes a working head 11, a shaft 12 and a handle 13. In the preferred embodiment shown, the shaft 12 is fitted with a pair of supporting wheels 14 and associated wheel mount 15. Wheels 14 bear some of the weight of the working head and thus make the tool easier to move. Working head 11 includes a housing 20 for an electric motor (not shown) driving a line cutter head (not shown) of conventional type. Working head 11 further includes a cowl 21 around the cutter head to reduce distribution of grass cuttings away from the head and protect the user's feet from the cutter head.

In the embodiment shown, the handle 13 comprises a fixed hand grip 22 and an adjustable pivotable hand grip 23 which can be adjusted for user-comfort. In the conventional manner, the electric motor is connected to a mains supply at appropriate voltage by means of a cable 24 passing up the shaft of the trimmer 10, through handle 13 and terminating in a plug 25 to which a mains supply can be connected by means of an extension cable.

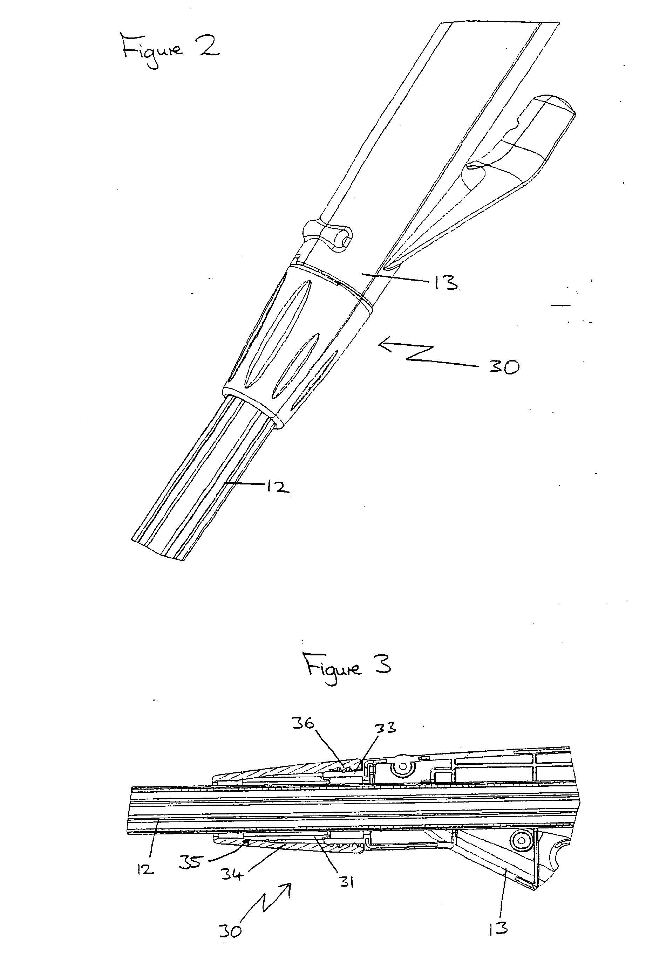

The line trimmer is configurable between the lawn trimmer and edge-trimmer configurations by means of the shaft 12 being rotatable within the handle 13 between two defined positions 90° apart and securable by means of a clamp assembly 30, shown in more detail in Figures 2 to 7. The working head 11 is also pivotable about a working head pivot point 16 at a lower end of shaft 12 from the horizontal working configuration shown in Figure 1A to a vertical working configuration which, with the additional rotation of the shaft described above, is shown in Figure 1B.

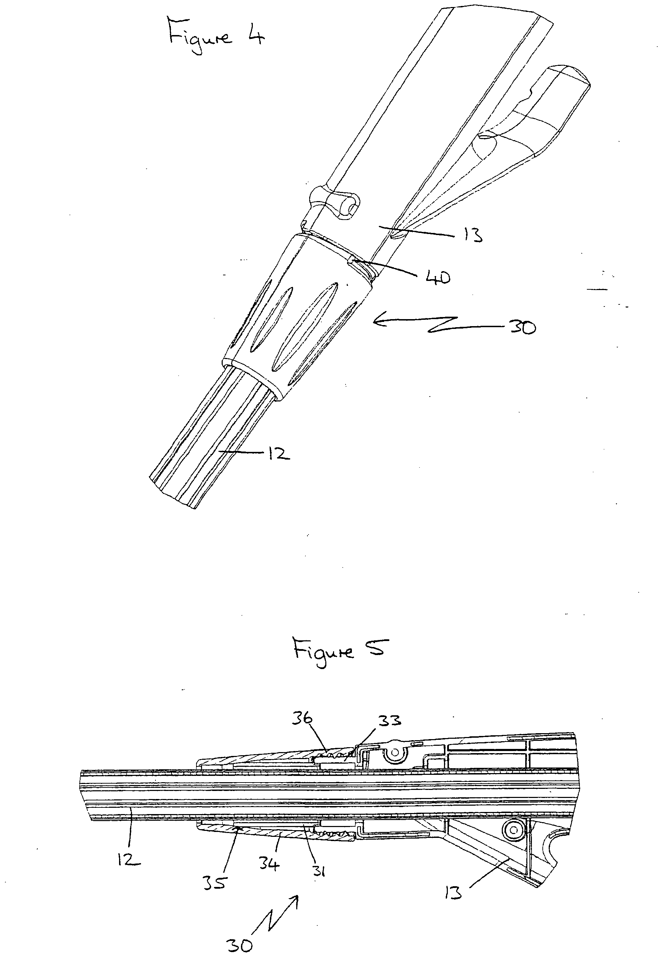

Figures 2 and 3 show the clamp assembly 30, handle 13 and shaft 13 in the locked position, Figures 4 and 5 show the clamp assembly in the unlocked position. Clamp assembly 30 includes an elongate clamp shaft 31 forming a part of handle 13. Clamp shaft 31 is generally cylindrical in character to match the outer profile of the shaft 12, and is formed by a plurality of radially spaced clamp shaft elements. Suitably, there are two clamp shaft elements 31a, 31b but three or four elements are equally suitable. A clamp element spacing 32 between adjacent clamp elements 31 allows a degree of radial flexibility to the clamping elements 31a, 31b.

Clamp shaft 31 includes an external threaded portion 33 for receipt of a corresponding internal thread 36 of a generally cylindrical clamp body 34. Clamp body 34 has an internal bearing surface 35 which, as clamp body 34 is screwed along threads 33, bears down upon clamping elements 31a, 31b, causing them to flex radially inwardly closing the spacing 32 between the adjacent elements 31a, 31b to bear against the outer surface of the shaft 12 inserted into the clamp assembly 13 and thereby frictionally secure it in place at a desired longitudinal and rotational position.

Rotation of the clamp body 34 in the opposite direction causes bearing of bearing surface 35 against clamping elements 31a, 31b to be released and thence bearing against shaft 12, to allow free movement of the shaft 12 with respect to the handle 13.

Clamp assembly 13 includes a limiting arrangement to limit the degree of rotation of clamp body 34 required to loosen the clamping of clamping elements 31a, 31b against shaft 12.

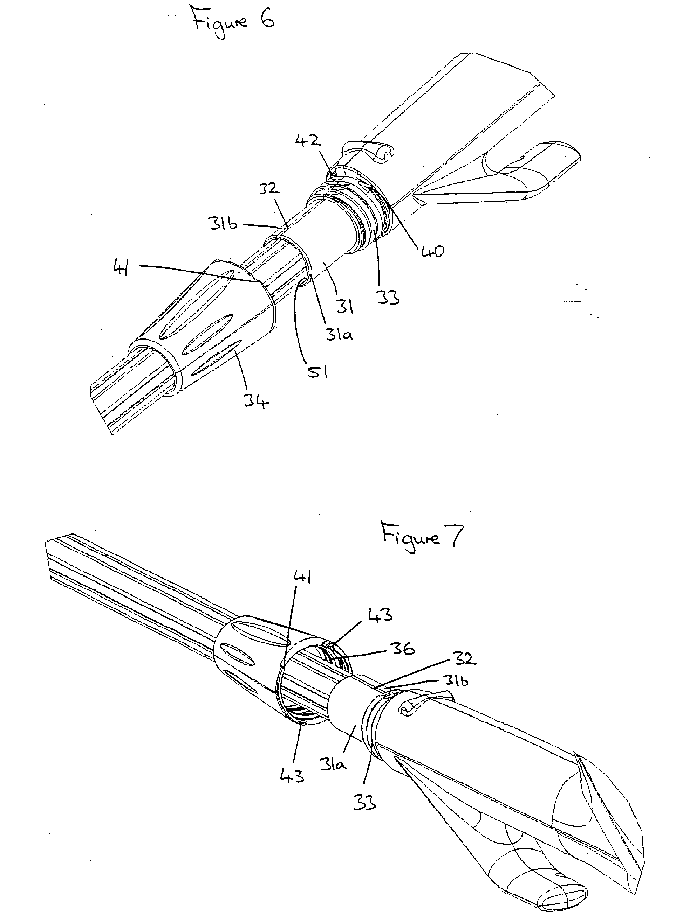

With this arrangement, a user need rotate clamp body 34 by less than one turn (approximately one-quarter of a turn) to loosen the clamp assembly and allow adjustment of the shaft. Rotation beyond the less than one turn is prevented, thereby minimising the degree of effort involved by the user in rotating the clamp body 34 between the locked and unlocked positions, and thus avoiding excessive or even complete unscrewing and re-screwing. The pitch of the thread is selected to provide sufficient release of bearing force in response to the predetermined amount of rotation. The limiting arrangement comprises a clamp shaft limit stop 40 formed towards but spaced from the "locked" end of the thread of clamp-shaft threaded portion 33. A corresponding clamp body limit stop 41 bears, in the assembled tool, against the clamp shaft limit stop 40 to prevent further rotation (anti-clockwise as view in Figure 6) of clamp body 34 but is distorted by the reverse ramp face of the limit stop so as to pass readily over it in the clockwise direction during initial assembly.

The apparatus further comprises a detent arrangement to hold the clamp body 34 in the locked position. The detent arrangement comprises a projection 42, suitably generally hemispherical, at the end of the thread of threaded portion 33 of the clamp shaft 31. A correspondingly-shaped recess 43 is formed in the corresponding part of clamp body 34. As clamp body 34 is tightened along clamp shaft 31, the body deforms in the region of recess 43 as it passes over and engages projection 42.

In the preferred embodiment shown, limiting arrangement 40,41 and detent arrangement 42,43 are each provided as opposed pairs of limit stops and detent components, to provide improved security.

As shown, the shaft of the tool is formed with a plurality of uniformly spaced longitudinal grooves 50. In the preferred embodiment shown, there are four grooves 50 separated radially by 90°. However, just two grooves, radially separated by 90° are functionally equivalent. At least one of shaft grooves 50 cooperates with a location tab 51 formed on an inner surface of clamp shaft 34. Grooves 50 and tab 51 form a locating arrangement to ensure correct orientation of shaft 12 (and thus working head 11) with respect to the handle 13. By radially spacing the grooves by 90° accurate reconfiguration of the tool between the trimming and edging configurations is made easier and quicker. To reconfigure the tool, clamp body 34 is loosened, shaft 12 rotated in the appropriate direction and clamp body 34 re-tightened. Clamp elements 31 a, 31b deform to allow tab 51 to pass over non-grooved portions of the shaft 12.

In the preferred embodiment shown, two opposed location tabs 51 are provided, on opposed inner surfaces of clamp shaft 34, providing more resilient engagement of the clamp shaft 34 with grooves 50 of the tool shaft 12.

## Claims

1. A garden tool having a working head (11), a handle (13) and a shaft (12) intermediate said working head (11) and handle (13), said shaft (12) being slidably mounted within the handle (13) to provide adjustment for length of the tool and wherein the shaft (12) is lockable at a desired tool length by means of a clamp assembly (30), said assembly (30) comprising a clamp body (34) rotatable upon a clamp shaft (31) between a locked position, in which adjustment of the shaft (12) within the handle (13) is prevented, and an unlocked position in which adjustment of the shaft (12) within the handle (13) is possible; wherein the shafts (12) includes a plurality of longitudinal grooves, the shaft is rotatable within the handle (13) assembly between two defined positions at about 90° to each other and wherein the clamp assembly (30) includes the clamp shaft (31) adapted to engage the shaft (12).

2. A garden tool as claimed in Claim 1 wherein the clamp shaft (12) further comprises at least one location tab (51) engageable with at least one longitudinal groove of the shaft (12) to define a preset angular position of handle (13) and shaft (12).

3. A garden tool as claimed in Claims 1 or Claim 2 in which the clamp shaft (12) includes at least two radially spaced clamp shaft elements.

4. A garden tool as claimed in any one of claims 1 to 3 in which the clamp shaft (12) includes from two to four longitudinal grooves, preferably two or three longitudinal grooves.

5. A garden tool as claimed in claim 4 in which the clamp shaft (12) includes four uniformly spaced longitudinal grooves.

6. A garden tool as claimed in Claim 5 in which the clamp shaft (12) further comprises two location tabs (51), on opposed inner surfaces of the clamp shaft (12) defining alternative preset angular positions of handle (13) and shaft (12) in opposition with said longitudinal groves.

7. A garden tool as claimed in Claim 6 wherein the location tabs (51) are on opposed inner surfaces of the clamp shaft elements.

8. A garden tool as claimed in any preceding claim wherein the clamp assembly (30) further comprises a clamp body (34) rotatable upon the clamp shaft (31) in a locking direction, in which the shaft (12) is caused to be held by the clamp assembly (30), and an unlocking direction, in which the shaft (12) is caused to be moveable within the clamp.

9. A garden tool as claimed in Claim 8 wherein the clamp shaft (31) includes an external threaded portion for receipt of a corresponding internal thread of the clamp body (34) and the clamp body (34) comprises an internal bearing surface adapted to bear down on the clamp shaft (31) as the clamp body (34) is rotated from an 'unlocked' position to a 'locked' position.

10. A garden tool as claimed in any one of claims 1 to 9 wherein the clamp shaft (31) comprises a plurality of radially spaced clamp shaft elements.

11. A garden tool as claimed in Claim 10 wherein the clamp shaft (31) comprises from two to four clamp shaft elements.

12. A garden tool as claimed in Claim 11 wherein the clamp shaft (31) comprises from two clamp shaft elements.

13. A garden tool adjustment as claimed in any one of claims 1 to 12 further comprising a limiting arrangement to limit the extent of permitted rotation of the clamp body (34) with respect to the clamp shaft (31) in the unlocking direction.

14. A garden tool adjustment as claimed in Claim 13 wherein the limiting arrangement limits rotation of the clamp body (34) to less than one full turn thereof; preferably to less than one half of a full turn; more preferably to less than one quarter of a full turn.

15. A garden tool as claimed in Claim 13 or Claim 14 wherein the limiting arrangement comprises a clamp shaft limit stop formed towards, but spaced from, a "locked" end of the thread of clamp-shaft threaded portion; and a corresponding clamp body limit stop formed in the clamp body (34).

16. A garden tool as claimed in Claim 15 in which the limit stop has a ramp on its reverse side so that the clamp body (34) is readily distorted so as to pass over the stop during assembly.

17. A garden tool as claimed in any one of claims 1 to 16 further comprising a detent arrangement to hold the clamp body (34) in the locked position.

18. A garden tool as claimed in Claim 17 wherein the detent arrangement comprises a generally hemispherical projection provided at the end of the thread of threaded portion of the clamp shaft (31), and a correspondingly-shaped recess formed in the corresponding part of the clamp body (34).

19. A garden tool as claimed in Claim 17 or Claim 18 comprising multiple detent arrangements.

20. A garden tool as claimed in any one of claims 1 to 18 wherein the limiting arrangement and/or detent arrangement are each provided as opposed pairs of limit stops and detent components.

21. A garden tool as claimed in any one of the preceding claims in which the handle (13) is moulded from a plastics material and the clamp shaft (31) forms a part of the handle moulding.

22. A garden tool as claimed in any preceding claim wherein the working head (11) is adjustable between a horizontal working configuration and a vertical working configuration.

## Patentansprüche

1. Gartengerät mit einem Betriebskopf (11), einem Griff (13) und einem zwischen dem Betriebskopf (11) und dem Griff (13) liegenden Schaft (12), wobei der Schaft (12) innerhalb des Griffes (13) verschiebbar montiert ist, um eine Längseinstellung des Werkzeugs bereitzustellen, und wobei der Schaft (12) auf einer gewünschten Werkzeuglänge durch eine Klemmanordnung (30) arretierbar ist, wobei die Anordnung (30) einen Klemmkörper (34) aufweist, der an einem Klemmschaft (31) zwischen einer arretierten Position, in der ein Einstellen des Schafts (12) innerhalb des Griffes (13) verhindert wird, und einer entsperrten Position drehbar ist, in der ein Einstellen des Schafts (12) innerhalb des Griffes (13) möglich ist; wobei der Schaft (12) eine Vielzahl länglicher Nuten umfasst, und der Schaft innerhalb der Griffanordnung (13) zwischen zwei bestimmten um ca. 90° zueinander liegenden Positionen drehbar ist, und wobei die Klemmanordnung (30) den Klemmschaft (31) umfasst, der zum Kuppeln am Schaft (12) angepasst ist.

2. Gartengerät nach Anspruch 1, wobei der Klemmschaft (12) ferner mindestens einen Stellreiter (51) aufweist, der mit mindestens einer länglichen Nut des Schafts (12) in Angriff bringbar ist, um eine voreingestellte Winkelposition von Griff (13) und Schaft (12) zu bestimmen.

3. Gartengerät nach Anspruch 1 oder Anspruch 2, in dem der Klemmschaft (12) mindestens zwei radial beabstandete Klemmschaftelemente umfasst.

4. Gartengerät nach einem der Ansprüche 1 bis 3, in dem der Klemmschaft (12) zwei bis vier längliche Nuten umfasst, vorzugsweise zwei oder drei längliche Nuten.

5. Gartengerät nach Anspruch 4, in dem der Klemmschaft (12) vier gleichförmig beabstandete längliche Nuten umfasst.

6. Gartengerät nach Anspruch 5, in dem der Klemmschaft (12) ferner zwei Stellreiter (51) an einander abgewandten Innenflächen des Klemmschafts (12) aufweist, die alternative voreingestellte Winkelpositionen von Griff (13) und Schaft (12) gegenüber den länglichen Nuten bestimmen.

7. Gartengerät nach Anspruch 6, wobei die Stellreiter (51) an abgewandten Innenflächen der Klemmschaftelemente sind.

8. Gartengerät nach einem der vorhergehenden Ansprüche, wobei die Klemmanordnung (30) ferner einen Klemmkörper (34) aufweist, der an dem Klemmschaft (31) in eine Arretierrichtung drehbar ist, in der der Schaft (12) dazu gebracht wird, durch die Klemmanordnung (30) niedergedrückt zu werden, und in eine Entsperrrichtung drehbar ist, in der der Schaft (12) dazu gebracht wird innerhalb der Klemme bewegbar zu sein.

9. Gartengerät nach Anspruch 8, wobei der Klemmschaft (31) einen äußeren Gewindeabschnitt zur Aufnahme eines entsprechenden Innengewindes des Klemmkörpers (34) umfasst, und wobei der Klemmkörper (34) eine Innenlagerfläche aufweist, die angepasst ist, um den Klemmschaft (31) niederzudrücken während der Klemmkörper (34) von einer "entsperrten" Position zu einer "gesperrten" Position gedreht wird.

10. Gartengerät nach einem der Ansprüche 1 bis 9, wobei der Klemmschaft (31) eine Vielzahl radial beabstandeter Klemmschaftelemente aufweist.

11. Gartengerät nach Anspruch 10, wobei der Klemmschaft (31) zwei bis vier Klemmschaftelemente aufweist.

12. Gartengerät nach Anspruch 11, wobei der Klemmschaft (31) zwei Klemmschaftelemente aufweist.

13. Gartengeräteinstellung nach einem der Ansprüche 1 bis 12, ferner mit einer begrenzenden Anordnung, um das Ausmaß einer erlaubten Drehung des Klemmkörpers (34) in Bezug auf den Klemmschaft (31) in der Entsperrrichtung zu begrenzen.

14. Gartengeräteinstellung nach Anspruch 13, wobei die begrenzende Anordnung die Drehung des Klemmkörpers (34) auf weniger als eine volle Drehung begrenzt; vorzugsweise auf weniger als eine halbe Drehung; vorzugsweise auf weniger als eine Vierteldrehung.

15. Gartengerät nach Anspruch 13 oder Anspruch 14, wobei die begrenzende Anordnung einen Klemmschaftbegrenzungsstopp aufweist, der in Richtung eines "gesperrten" Endes des Gewindes des Gewindeabschnitts des Klemmschafts, jedoch davon beabstandet ausgebildet ist; und einen entsprechenden in dem Klemmkörper (34) ausgebildeten Klemmkörperbegrenzungsstopp aufweist.

16. Gartengerät nach Anspruch 15, bei dem der Begrenzungsstopp eine Rampe an dessen Rückseite hat, so dass der Klemmkörper (34) leicht verdrehbar ist, um während des Zusammenbaus über den Stopp überzugehen.

17. Gartengerät nach einem der Ansprüche 1 bis 16, ferner mit einer Arretierungsanordnung, um den Klemmkörper (34) in der Sperrposition zu halten.

18. Gartengerät nach Anspruch 17, wobei die Arretierungsanordnung einen im Wesentlichen halbkugelförmigen Vorsprung, der an dem Ende des Gewindes des Gewindeabschnitts des Klemmschafts (31) vorgesehen ist, und einen entsprechend geformten Einschnitt aufweist, der in dem entsprechenden Teil des Klemmkörpers (34) ausgebildet ist.

19. Gartengerät nach Anspruch 17 oder 18, mit mehreren Arretierungsanordnungen.

20. Gartengerät nach einem der Ansprüche 1 bis 18, wobei die begrenzende Anordnung und/oder die Arretierungsnordnung jeweils als gegenüberliegende Paare von Begrenzungsstopps und Arretierungskomponenten vorgesehen sind.

21. Gartengerät nach einem der vorhergehenden Ansprüche, in denen der Griff (13) aus einem Kunststoffmaterial geformt ist und der Klemmschaft (31) einen Teil der Griffform ausbildet.

22. Gartengerät nach einem der vorhergehenden Ansprüche, wobei der Betriebskopf (11) zwischen einer horizontalen Betriebskonfiguration und einer vertikalen Betriebskonfiguration einstellbar ist.

## Revendications

1. Outil de jardinage comprenant une tête de travail (11), une poignée (13) et un arbre (12) situé entre lesdites tête de travail (11) et poignée (13), ledit arbre (12) étant monté en coulissement dans la poignée (13) afin de permettre le réglage de la longueur de l'outil et dans lequel l'arbre (12) peut être verrouillé à une longueur désirée de l'outil au moyen d'un ensemble de serrage (30) ; ledit ensemble (30) comprenant un corps de serrage (34) pouvant tourner autour d'un arbre de serrage (31) entre une position verrouillée, dans laquelle le réglage de l'arbre (12) dans la poignée (13) ne peut avoir lieu, et une position déverrouillée dans laquelle le réglage de l'arbre (12) dans la poignée (13) est possible ; dans lequel l'arbre (12) comporte une pluralité de rainures longitudinales, l'arbre peut tourner dans l'ensemble de poignée (13) entre deux positions définies à environ 90° 1"une par rapport à l'autre et où l'ensemble de serrage (30) comporte l'arbre de serrage (31) adapté pour s'engager avec l'arbre (12).

2. Outil de jardinage tel que revendiqué dans la revendication 1 dans lequel l'arbre de serrage (12) comprend en outre au moins une languette de positionnement (51) pouvant s'engager avec au moins une rainure longitudinale de l'arbre (12) pour définir une position angulaire préréglée de la poignée (13) et de l'arbre (12).

3. Outil de jardinage tel que revendiqué dans la revendication 1 ou 2 dans lequel l'arbre de serrage (12) comporte au moins deux éléments d'arbre de serrage radialement espacés.

4. Outil de jardinage tel que revendiqué dans l'une quelconque des revendications 1 à 3 dans lequel l'arbre de serrage (12) comporte de deux à quatre rainures longitudinales, de préférence deux ou trois rainures longitudinales.

5. Outil de jardinage tel que revendiqué dans la revendication 4 dans lequel l'arbre de serrage (12) comporte quatre rainures longitudinales uniformément espacées.

6. Outil de jardinage tel que revendiqué dans la revendication 5 dans lequel l'arbre de serrage (12) comprend en outre deux languettes de positionnement (51), sur des surfaces internes opposées de l'arbre de serrage (12) définissant des positions angulaires préréglées alternatives de la poignée (13) et de l'arbre (12) en regard desdites rainures longitudinales.

7. Outil jardinage tel que revendiqué dans la revendication 6 dans lequel les languettes de positionnement (51) sont placées sur des surfaces internes opposées des éléments d'arbre de serrage.

8. Outil de jardinage tel que revendiqué dans l'une des revendications précédentes dans lequel l'ensemble de serrage (30) comprend en outre un corps de serrage (34) pouvant tourner sur l'arbre de serrage (31) dans une direction de verrouillage, dans laquelle l'arbre (12) est amené à être maintenu par l'ensemble de serrage (30) ; et dans une direction de déverrouillage, dans laquelle l'arbre (12) est amené à se déplacer dans l'ensemble de serrage.

9. Outil de jardinage tel que revendiqué dans la revendication 8 dans lequel l'arbre de serrage (31) comporte une partie filetée externe destinée à recevoir un filetage interne correspondant du corps de serrage (34) et le corps de serrage (34) comprend une surface d'appui interne adaptée pour appuyer sur l'arbre de serrage (31) à mesure que le corps de serrage (34) est tourné d'une position 'déverrouillée' à une position 'verrouillée'.

10. Outil de jardinage tel que revendiqué dans l'une quelconque des revendications 1 à 9, dans lequel l'arbre de serrage (31) comprend une pluralité d'éléments d'arbre de serrage radialement espacés.

11. Outil de jardinage tel que revendiqué dans la revendication 10, dans lequel l'arbre de serrage (31) comprend de deux à quatre éléments d'arbre de serrage.

12. Outil de jardinage tel que revendiqué dans la revendication 11, dans lequel l'arbre de serrage (31) comprend deux éléments d'arbre de serrage ou plus.

13. Réglage d'outil de jardinage tel que revendiqué dans l'une quelconque des revendications 1 à 12 comprenant en outre un agencement de limitation pour limiter le degré de rotation autorisée du corps de serrage (34) par rapport à l'arbre de serrage (31) dans la direction de déverrouillage.

14. Réglage d'outil de jardinage tel que revendiqué dans la revendication 13 dans lequel l'agencement de limitation limite la rotation du corps de serrage (34) à moins d'un tour complet de celui-ci ; de préférence à moins de la moitié d'un tour complet ; plus préférablement à moins d'un quart de tour complet.

15. Outil de jardinage tel que revendiqué dans la revendication 13 ou 14, dans lequel l'agencement de limitation comprend une butée d'arrêt d'arbre de serrage formée vers une extrémité « verrouillée » du filetage de la partie filetée de l'arbre de serrage, mais espacée de celle-ci ; et une butée d'arrêt correspondante de corps de serrage formée dans le corps de serrage (34).

16. Outil de jardinage tel que revendiqué dans la revendication 15 dans lequel la butée d'arrêt présente une rampe sur son côté arrière, de sorte que le corps de serrage (34) soit facilement déformé de manière à passer au-dessus de la butée pendant l'assemblage.

17. Outil de jardinage tel que revendiqué dans l'une quelconque des revendications 1 à 16, comprenant en outre un agencement de verrouillage pour maintenir le corps de serrage (34) dans la position verrouillée.

18. Outil de jardinage tel que revendiqué dans la revendication 17 dans lequel l'agencement de verrouillage comprend une projection globalement hémisphérique prévue au niveau de l'extrémité du filetage de la partie filetée de l'arbre de serrage (31) ; et un évidement de forme correspondante formé dans la partie correspondante du corps de serrage (34).

19. Outil de jardinage tel que revendiqué dans la revendication 17 ou 18 comprenant plusieurs agencements de verrouillage.

20. Outil de jardinage tel que revendiqué dans l'une quelconque des revendications 1 à 18, dans lequel l'agencement de limitation et/ou l'agencement de verrouillage sont prévus chacun en tant que paires opposées de butées d'arrêt et de composants de verrouillage.

21. Outil de jardinage tel que revendiqué dans l'une quelconque des revendications précédentes dans lequel la poignée (13) est moulée à partir d'une matière plastique et l'arbre de serrage (31) fait partie du moulage de la poignée.

22. Outil de jardinage tel que revendiqué dans l'une des revendications précédentes dans lequel la tête de travail (11) est réglable entre une configuration de travail horizontale et une configuration de travail verticale.
